# EUROPEAN PATENT APPLICATION

(11) **EP 4 365 485 A1**
(43) Date of publication of application: **08.05.2024**
(21) Application number: 22832901.7
(22) Date of filing: 20.06.2022
(51) Int. Cl.: F21S 43/15, F21S 43/19, F21S 43/20, F21V 5/04, F21V 11/08, F21W 103/10, F21W 103/20, F21W 103/60, F21Y 115/10

(54) **LAMP UNIT**

(30) Priority: 30.06.2021 JP 2021109185
(71) Applicant: KOITO MANUFACTURING CO., LTD., Minato-ku, Tokyo, 108-8711 (JP)
(72) Inventor: KITAZAWA, Yukiko, Shizuoka-shi, Shizuoka 424-8764 (JP); AMANO, Heisuke, Shizuoka-shi, Shizuoka 424-8764 (JP); KANEZUKA, Shohei, Shizuoka-shi, Shizuoka 424-8764 (JP); SASAKI, Masaru, Shizuoka-shi, Shizuoka 424-8764 (JP)
(74) Representative: Hoffmann Eitle
(86) International application number: PCT/JP2022/024497
(87) International publication number: WO 2023/276751

(57) **Abstract**

A lamp unit (10) is provided with: a first unit having a light-emitting part; a light source; a second unit having a lens part (32) with a shape different from that of the light-emitting part; and a shield part (5) having an opening, the shield part (5) shielding from the outside a member provided on the back of the shield part (5). The first unit is disposed in a position where the light-emitting part can be visually recognized from the outside of the lamp unit (10) in a frontal view. The lens part (32) of the second unit is disposed on the back of the shield part (5) or in the opening. At least a part of the lens part (32) of the second unit is provided in a position not visible in the frontal view, and light emitted from the light source is projected forward through the opening provided in the shield part (5).

## Description

### TECHNICAL FIELD

The present disclosure relates to a lamp unit.

### BACKGROUND ART

As a lamp for a vehicle, for example, a turn signal lamp or a road surface drawing lamp that notifies the surroundings of the vehicle of an operation such as a right or left turn of the vehicle is known. Patent Literature 1 discloses a vehicle including a turn signal lamp and a road surface drawing lamp for drawing a predetermined drawing image on a road surface.

### CITATION LIST

### PATENT LITERATURE

Patent Literature 1: WO2019/044404

### SUMMARY OF INVENTION

### TECHNICAL PROBLEM

Here, many of backup lamps and the turn signal lamps have a horizontally long light emitting unit, whereas many of the road surface drawing lamps have a convex lens. Therefore, a shape of the light emitting unit of the backup lamp or turn signal lamp in a front view and a shape of the lens of the road surface drawing lamp in a front view are different. For example, in a case where the backup lamp and the road surface drawing lamp are disposed in a horizontal row or the like, the design uniformity of the lamp may be impaired, and a design property of a lamp unit may be deteriorated. Therefore, if the lamp unit is designed so as not to impair the design property of the lamp unit, a degree of freedom in design of the lamp unit may be restricted.

An object of the present disclosure is to provide a lamp unit having a high degree of freedom in design.

### SOLUTION TO PROBLEM

A lamp unit according to an aspect of the present disclosure is a lamp unit including:
a first unit including a light emitting unit;
a second unit including a light source and a lens unit having a shape different from that of the light emitting unit; and
a shielding portion having an opening portion and shielding a member provided on a back side of the shielding portion from the outside, in which
the first unit is disposed at a position where the light emitting unit is capable of being visually recognized from the outside of the lamp unit in a front view,
the lens unit of the second unit is disposed on the back side of the shielding portion or in the opening portion, and
at least a part of the lens unit of the second unit is provided at a position where at least the part is invisible in a front view, and light emitted from the light source is projected forward via the opening portion provided in the shielding portion.

According to the above configuration, the second unit has the lens unit having a shape different from that of the light emitting unit of the first unit. In addition, at least a part of the lens unit is provided at the position where at least the part is invisible from the outside of the lamp unit by the shielding portion in a front view. Therefore, an arrangement place of the second unit and the shape of the lens unit can be designed without considering the first unit. The lamp unit configured as described above has a high degree of freedom in design.

### ADVANTAGEOUS EFFECTS OF INVENTION

According to the present disclosure, it is possible to provide the lamp unit having a high degree of freedom in design.

### BRIEF DESCRIPTION OF DRAWINGS

[FIG. 1] FIG. 1 is a view illustrating the rear of a vehicle including a lamp unit according to an aspect of the present embodiment.
[FIG. 2] FIG. 2 is a cross-sectional view of the lamp unit according to a first embodiment.
[FIG. 3] FIG. 3 is a front view of the lamp unit according to the first embodiment.
[FIG. 4] FIG. 4 is a front view of a lamp unit according to a second embodiment.
[FIG. 5] FIG. 5 is a front view of a lamp unit according to a third embodiment.
[FIG. 6A] FIG. 6A is a diagram illustrating a lens according to a modification.
[FIG. 6B] FIG. 6B is a diagram illustrating the lens according to the modification.

### DESCRIPTION OF EMBODIMENTS

Hereinafter, embodiments of the present disclosure will be described with reference to the drawings. The dimensions of the members illustrated in the drawings may be different from the actual dimensions of the members for convenience of description.

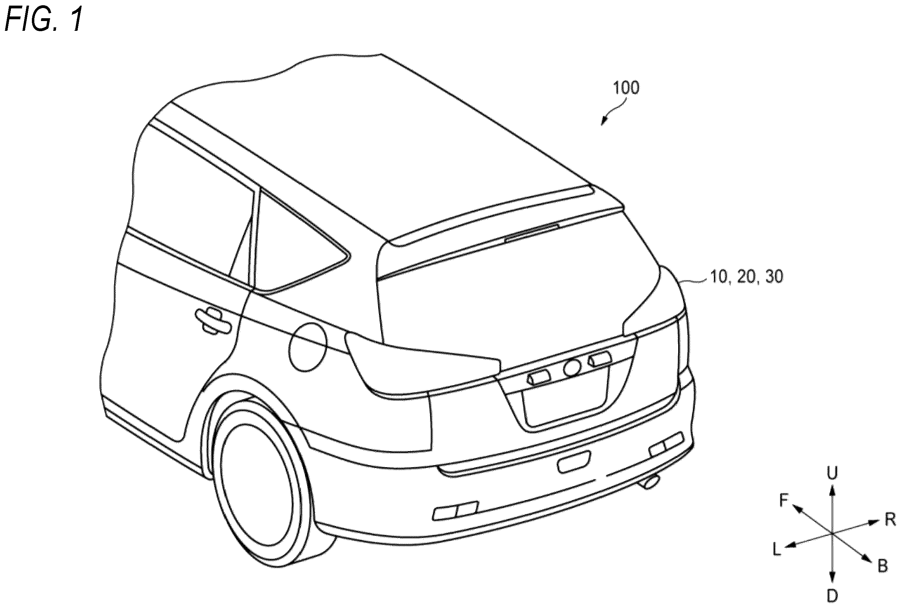

In the description of the present embodiment, for convenience of description, a "left-right direction", an "upper-lower direction", and a "front-rear direction" may be referred to as appropriate. The directions are relative directions set for a vehicle 100 illustrated in FIG. 1. Here, the "left-right direction" is a direction including a "left direction" and a "right direction". The "upper-lower direction" is a direction including an "upper direction" and a "lower direction". The "front-rear direction" is a direction including a "front direction" and a "rear direction". The front-rear direction is a direction orthogonal to the left-right direction and the upper-lower direction. In the drawings, a reference numeral U denotes the upper direction. A reference numeral D denotes the lower direction. A reference numeral F denotes the front direction. A reference numeral B indicates the rear direction. A reference numeral L indicates the left direction. A reference numeral R denotes the right direction.

### First Embodiment

A vehicle 100 including a lamp unit 10 according to the present embodiment will be described below with reference to FIG. 1. FIG. 1 is a view illustrating a rear portion of the vehicle 100 including the lamp unit 10 according to the present embodiment. The vehicle 100 is, for example, a vehicle (an automatic vehicle) that can travel in a manual driving mode or an automated driving mode. The vehicle 100 includes the lamp unit 10. For convenience of description, in the present embodiment, it is assumed that the vehicle 100 is positioned in a horizontal flat road.

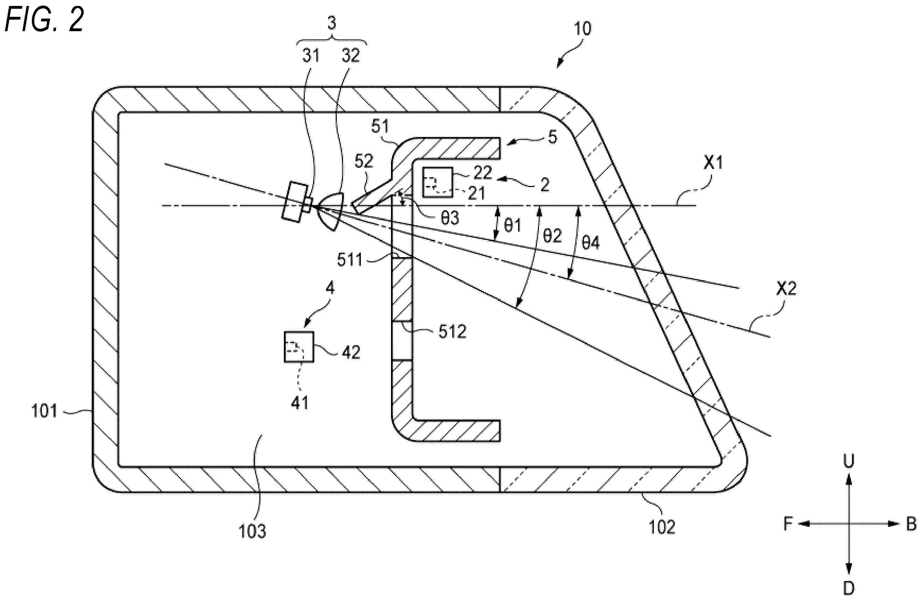

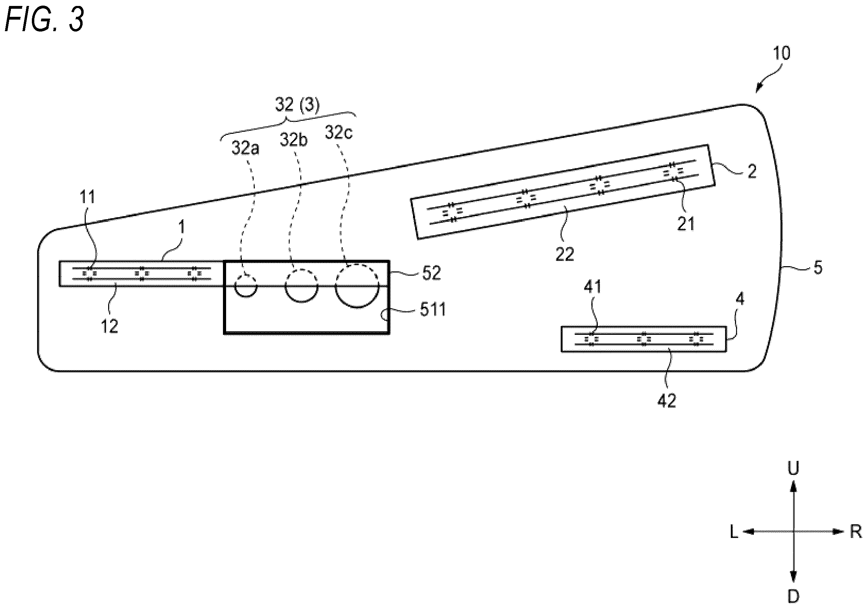

As illustrated in FIG. 2, the lamp unit 10 includes a lamp body 101 having an opening in front of a lamp, and a transparent outer cover 102 covering the opening of the lamp body 101. As illustrated in FIGS. 2 and 3, the lamp unit 10 includes a backup lamp 1 (an example of a first unit), a turn signal lamp 2 (an example of the first unit), a road surface drawing lamp (a road surface rendering lamp) 3 (an example of a second unit), a vehicle width lamp 4 (an example of the second unit), and a shielding portion 5. The backup lamp 1, the turn signal lamp 2, the road surface drawing lamp 3, the vehicle width lamp 4, and the shielding portion 5 are accommodated in a lamp chamber 103 formed by the lamp body 101 and the outer cover 102.

The backup lamp 1 includes a first light source 11 and a first light emitting unit 12. The backup lamp 1 emits light (for example, white light) toward the rear of the vehicle 100, for example, when the vehicle 100 is moving rearward. The backup lamp 1 is disposed on a back side of the shielding portion 5 (on a front side of the shielding portion 5 in FIG. 2). As illustrated in FIG. 3, the backup lamp 1 is disposed in a horizontal row with the road surface drawing lamp 3 in a front view. In the present specification, the term "horizontal row" refers to a state in which two or more different objects form a row in the horizontal direction (the left-right direction in FIG. 3), and it is not necessary to form a linear row. In addition, the backup lamp 1 is disposed such that the first light emitting unit 12 can be visually recognized from the outside of the lamp unit 10 in a front view.

The first light source 11 includes, for example, a light emitting diode (LED) element or a laser diode (LD) element. The first light source 11 emits light toward the first light emitting unit 12.

The first light emitting unit 12 is a lens formed of a material having transparency such as a transparent resin such as acrylic or glass. The first light emitting unit 12 is disposed in front of the first light source 11 (behind the vehicle 100) of the lamp unit 10. The first light emitting unit 12 has a flat shape extending in a longitudinal direction of the lamp unit 10 (the left-right direction in FIG. 3). The first light emitting unit 12 transmits the light emitted from the first light source 11 toward the front of the lamp unit 10 (toward the rear of the vehicle 100). In the following description, the front of the lamp unit 10 coincides with the rear of the vehicle 100, and the rear of the lamp unit 10 coincides with the front of the vehicle 100. The front of the lamp unit 10 is a direction in which the backup lamp 1, the turn signal lamp 2, the road surface drawing lamp 3, and the vehicle width lamp 4 project light. A rear region of the vehicle 100 which is an external region of the lamp unit 10 is illuminated with the light emitted from the first light source 11. The first light emitting unit 12 may include a reflecting mirror or the like instead of a lens.

As illustrated in FIGS. 2 and 3, the turn signal lamp 2 is disposed in front of the backup lamp 1, the road surface drawing lamp 3, and the vehicle width lamp 4 (behind the vehicle 100). The turn signal lamp 2 includes a second light source 21 and a second light emitting unit 22. The turn signal lamp 2 causes a subject to change a traveling direction of the vehicle 100 by illuminating the surroundings of the vehicle 100 with light, for example. The turn signal lamp 2 is disposed in a horizontal row with the road surface drawing lamp 3 in a front view. The turn signal lamp 2 is disposed such that the second light emitting unit 22 can be visually recognized from the outside of the lamp unit 10 in a front view.

The second light source 21 can be implemented with, for example, an LED element or an LD element similarly to the first light source 11. The second light source 21 emits light toward the second light emitting unit 22. The second light source 21 is disposed at a position where the second light source 21 is not hidden by the shielding portion 5 and above the backup lamp 1, the road surface drawing lamp 3, and the vehicle width lamp 4.

For example, the second light emitting unit 22 can be implemented with a lens, a reflecting mirror, or the like similarly to the first light emitting unit 12. The second light emitting unit 22 is disposed at a position where the second light emitting unit 22 faces the second light source 21. The second light emitting unit 22 has a flat shape extending in the longitudinal direction of the lamp unit 10 (the left-right direction in FIG. 3). The second light emitting unit 22 transmits the light emitted from the second light source 21 toward the front of the lamp unit 10 (toward the rear of the vehicle 100). The rear region of the vehicle 100 which is the external region of the lamp unit 10 is illuminated with the light emitted from the second light source 21.

The road surface drawing lamp 3 draws/renders an image (road surface drawing/rendering pattern) indicating predetermined information on the road surface by illuminating the road surface in the vicinity of the vehicle 100 with light. The predetermined information is, for example, information on a scheduled traveling direction of the vehicle 100, information prompting a pedestrian or another vehicle to stop or decelerate. The road surface drawing lamp 3 includes a third light source 31 and a lens unit 32.

The third light source 31 can be implemented with, for example, an LED element or an LD element similarly to the first light source 11. The third light source 31 is disposed, for example, behind the shielding portion 5 (in front of the vehicle 100) and above the vehicle width lamp 4. The third light source 31 emits light toward the lens unit 32.

The lens unit 32 includes three lenses 32a to 32c. The lenses 32a to 32c are arranged in the longitudinal direction of the lamp unit 10 (the left-right direction in FIG. 3). The lenses 32a to 32c are formed of, for example, a material having transparency such as a transparent resin such as acrylic or glass. The lenses 32a to 32c are, for example, aspherical lenses.

As illustrated in FIG. 3, the lens 32a is substantially circular in a front view of the lamp unit 10 (as viewed from the rear of the vehicle 100). The lenses 32b to 32c have the same configuration as the lens 32a. The lenses 32a to 32c are bigger in an order of the lens 32a, the lens 32b, and the lens 32c.

As illustrated in FIG. 2, the lens unit 32 projects the light emitted from the third light source 31 toward the front of the lamp unit 10. The light emitted from the third light source 31 is applied to a region where the light is inclined downward by an angle θ1 or more and an angle θ2 or less with respect to an axis X1 extending in a horizontal direction from the lamp unit 10. The road surface in the vicinity of the vehicle 100 is illuminated with the light emitted from the third light source 31, and accordingly the image (road surface drawing pattern) indicating the predetermined information is drawn on the road surface.

The light emitted from the third light source 31 is applied to, for example, a region where the light is inclined downward by 5 degrees or more and 58 degrees or less with respect to the axis X1. However, the angle θ1 and the angle θ2 are not limited to the numerical values. The angle θ1 may be 5 degrees or more, preferably 10 degrees. The angle θ2 may be 58 degrees or less. The angle θ1 is particularly preferably 11 degrees, and the angle θ2 is particularly preferably 58 degrees. The lens unit 32 is disposed between the third light source 31 and the shielding portion 5 and on the back side of the shielding portion 5 (on a front side of the shielding portion 5 in FIG. 2).

As illustrated in FIGS. 2 and 3, the vehicle width lamp 4 includes a fourth light source 41 and a fourth light emitting unit 42. The vehicle width lamp 4 emits light toward the rear of the vehicle 100 in order to indicate the presence of the vehicle 100. The vehicle width lamp 4 is disposed at a position where the fourth light emitting unit 42 can be visually recognized from the outside of the lamp unit 10 in a front view.

The fourth light source 41 can be implemented with, for example, an LED element or an LD element similarly to the first light source 11. The fourth light source 41 is disposed inside the vehicle width lamp 4, for example. The fourth light source 41 emits light toward the fourth light emitting unit 42.

For example, the fourth light emitting unit 42 can be implemented with a lens, a reflecting mirror, or the like similarly to the first light emitting unit 12. The fourth light emitting unit 42 is disposed at a position where the fourth light emitting unit 42 faces the fourth light source 41. The fourth light emitting unit 42 has a flat shape extending in the longitudinal direction of the lamp unit 10 (the left-right direction in FIG. 3) in a front view. The fourth light emitting unit 42 is disposed between the fourth light source 41 and the shielding portion 5. The fourth light emitting unit 42 transmits the light emitted from the fourth light source 41 toward the front of the lamp unit 10 (toward the rear of the vehicle 100).

The shielding portion 5 is, for example, a frame shaped panel member (extension) disposed on the front side of the lamp unit 10, and shields a member provided on the back side (front side of the shielding portion 5 in FIG. 2) of the shielding portion 5 from the outside (the rear of the vehicle 100). The shielding portion 5 may be made of a thermoplastic resin such as polycarbonate, polypropylene, and polybutylene terephthalate resin. A metal film such as aluminum may be deposited on the surface of the shielding portion 5 (a surface on the rear of the vehicle 100).

The shielding portion 5 includes a main body portion 51 and a plate-shaped portion 52. The main body portion 51 has a plate-shaped portion extending in the left-right direction and the upper-lower direction. As illustrated in FIG. 2, the main body portion 51 has a substantially U shape in a cross-sectional view. A first opening portion 511 and a second opening portion 512 are formed in the main body portion 51. The first opening portion 511 and the second opening portion 512 each have a flat shape extending in the longitudinal direction of the lamp unit 10 (the left-right direction in FIG. 3). In the present embodiment, a longitudinal direction of the first opening portion 511 coincides with an arrangement direction of the lenses 32a to 32c of the road surface drawing lamp 3. A longitudinal direction of the second opening portion 512 coincides with a longitudinal direction of the fourth light emitting unit 42 of the vehicle width lamp 4.

The first opening portion 511 is provided above the second opening portion 512. The first opening portion 511 is configured to project the light emitted from the third light source 31 of the road surface drawing lamp 3 and transmitted through the lens unit 32 to the front of the lamp unit 10. The second opening portion 512 is configured to project the light emitted from the fourth light source 41 of the vehicle width lamp 4 toward the front of the lamp unit 10.

The plate-shaped portion 52 is a plate-shaped member and has a substantially I-shape in a cross-sectional view. The plate-shaped portion 52 is inclined with respect to the horizontal direction of the lamp unit 10 in a cross-sectional view. Specifically, the plate-shaped portion 52 is inclined at an angle θ3 (an example of a first angle) with respect to the axis X1 extending in the horizontal direction from the lamp unit 10. In other words, the angle θ3 is an inclination angle of the plate-shaped portion 52 with respect to the axis X1 (horizontal direction). Here, assuming that an angle formed by an optical axis X2 of the light emitted from the third light source 31 of the road surface drawing lamp 3 and the axis X1 extending in the horizontal direction is an angle θ4 (an example of a second angle), the angle θ3 is smaller than the angle θ4.

As illustrated in FIG. 3, the plate-shaped portion 52 hides a part of the lens unit 32 so that portions (upper portion) of the lenses 32a to 32c are invisible from the outside of the lamp unit 10 in a front view. In other words, a part of the lens unit 32 is provided at a position where the part thereof is invisible from the outside of the lamp unit 10 in a front view.

Here, many of backup lamps and the turn signal lamps have a horizontally long light emitting unit, whereas many of the road surface drawing lamps have a convex lens. Therefore, in the lamp unit having the backup lamp, the turn signal lamp, and the road surface drawing lamp, for example, a horizontally long lens of the backup lamp or the turn signal lamp and the round lens of the road surface drawing lamp are mixed. When the irregular lenses are mixed in this way, the design uniformity may be impaired, and a design property of the lamp unit may be deteriorated. In particular, in the lamp unit in which the light emitting unit of the backup lamp or the turn signal lamp and the lens of the road surface drawing lamp are disposed in a horizontal row, the deterioration of the design property tends to be remarkable. On the other hand, if the lamp unit is designed so as not to impair the design property of the lamp unit, a degree of freedom in design of the lamp unit may be restricted.

According to the lamp unit 10 configured as described above, the road surface drawing lamp 3 includes the lens unit 32 having a shape different from that of the first light emitting unit 12 of the backup lamp 1 and the second light emitting unit 22 of the turn signal lamp 2. In addition, at least a part of the lens unit 32 (for example, the upper portions of the lenses 32a to 32c) is provided at a position where at least the part thereof is invisible by the shielding portion 5 in a front view. Therefore, an arrangement place of the road surface drawing lamp 3 and the shape of the lens unit 32 can be designed without considering the first light emitting unit 12 of the backup lamp 1 and the second light emitting unit 22 of the turn signal lamp 2. Accordingly, the lamp unit 10 has a high degree of freedom in design.

However, although a light emitting unit of a lamp mounted on a vehicle generally has a flat shape extending in the longitudinal direction, according to the lamp unit 10 configured as described above, even if the first light emitting unit 12 of the backup lamp 1 and the second light emitting unit 22 of the turn signal lamp 2 are designed in the flat shape extending in the longitudinal direction, a round lens or the like can be used as the lens unit 32 of the road surface drawing lamp 3 without considering the shapes of the first light emitting unit 12 and the second light emitting unit 22. Accordingly, the degree of freedom in design of the lamp unit 10 is high.

According to the lamp unit 10 configured as described above, the arrangement direction of the plurality of lenses 32a to 32c included in the lens unit 32 coincides with the longitudinal direction of the first opening portion 511 of the shielding portion 5. Therefore, even when the lens unit 32 is disposed on the back side of the shielding portion 5, the light emitted from the third light source 31 of the road surface drawing lamp 3 is not blocked by the shielding portion 5.

According to the lamp unit 10 configured as described above, the road surface drawing lamp 3 emits the light to, for example, the region where the light is inclined downward by 5 degrees or more with respect to the axis X1 extending in the horizontal direction from the lamp unit 10. In this case, even if the lens unit 32 is disposed on the back side of the shielding portion 5, the light emitted from the road surface drawing lamp 3 is preferably not blocked by the shielding portion 5.

According to the lamp unit 10 configured as described above, at least the part of the lens unit 32 (for example, the upper portions of the lenses 32a to 32c) is not visually recognized from the outside of the lamp unit 10 by the plate-shaped portion 52 of the shielding portion 5, whereas the light emitted from the third light source 31 of the road surface drawing lamp 3 is not blocked by the plate-shaped portion 52 of the shielding portion 5. Therefore, according to the lamp unit 10, the road surface can be drawn without visually recognizing the lens unit 32.

### Second Embodiment

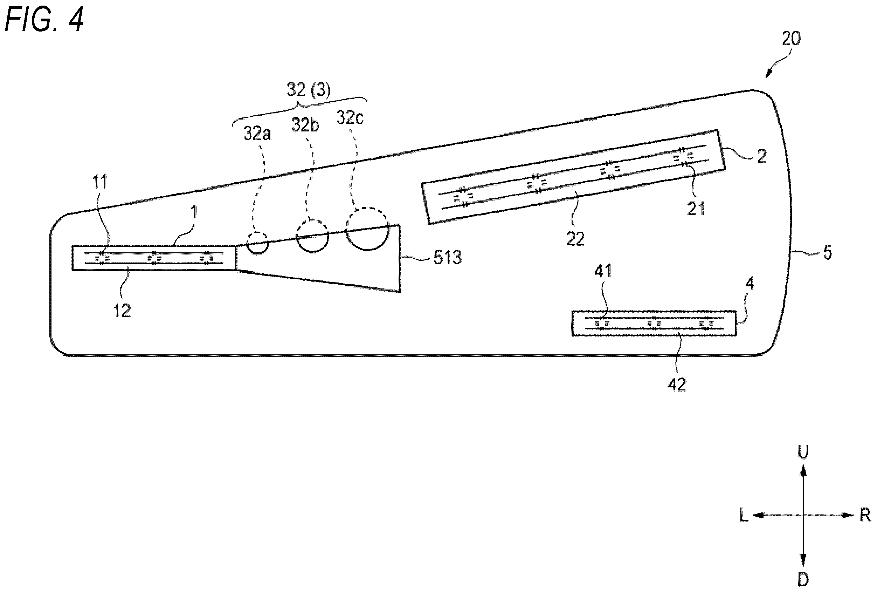

Next, a lamp unit 20 will be described with reference to FIG. 4. In the description of the lamp unit 20, the same components as those of the lamp unit 10 according to the first embodiment are denoted by the same reference numerals, and description thereof is omitted. The lamp unit 20 differs from the lamp unit 10 in that the lamp unit 20 includes a third opening portion 513 having a shape different from that of the first opening portion 511.

As illustrated in FIG. 4, the third opening portion 513 has a trapezoidal shape in a front view. In the present embodiment, parts (lower portions) of the lenses 32a to 32c can be visually recognized from the outside of the lamp unit 10 in a front view via the third opening portion 513. On the other hand, parts (upper portions) of the lenses 32a to 32c is invisible from the outside of the lamp unit 10 in a front view.

The lamp unit 20 according to the second embodiment can also achieve the same effects as the lamp unit 10 according to the first embodiment.

### Third Embodiment

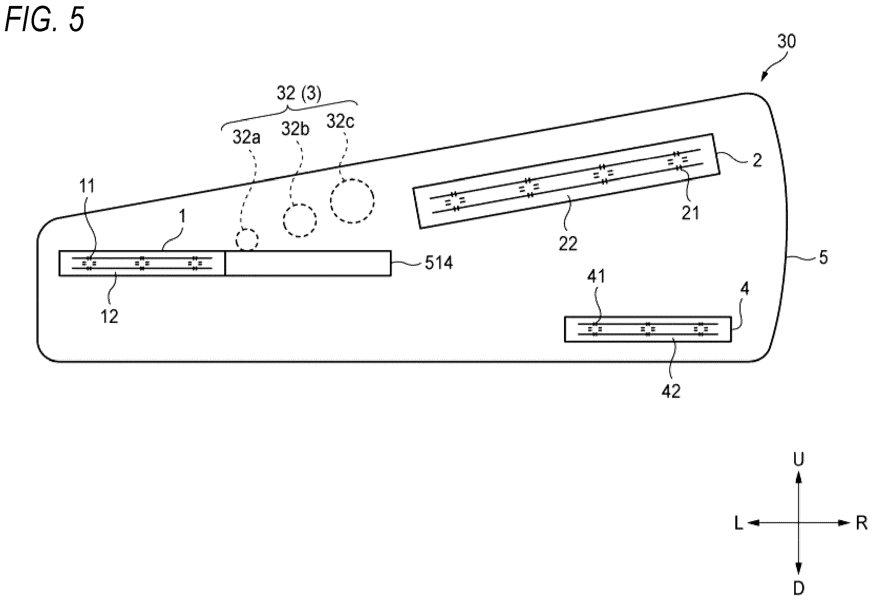

Next, a lamp unit 30 will be described with reference to FIG. 5. In the description of the lamp unit 30, the same components as those of the lamp unit 10 according to the first embodiment are denoted by the same reference numerals, and description thereof is omitted. The lamp unit 30 differs from the lamp unit 10 in that the lamp unit 30 includes a fourth opening portion 514 having a size different from that of the first opening portion 511. The lamp unit 30 is different from the lamp unit 10 in that arrangement of the lenses 32a to 32c included in the lens unit 32 is different from the arrangement of the lenses 32a to 32c in the first embodiment.

As illustrated in FIG. 5, in the present embodiment, lower end portions of the lenses 32a to 32c are positioned above the fourth opening portion 514. The lenses 32a to 32c are provided at positions where the lenses 32a to 32c are invisible from the outside of the lamp unit 10 in a front view.

The lamp unit 30 according to the third embodiment can also achieve the same effects as the lamp unit 10 according to the first embodiment.

### Modification of Lens

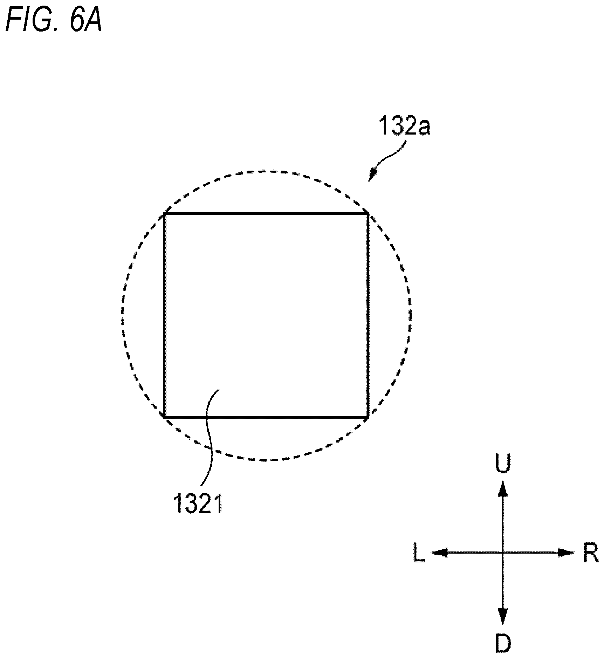

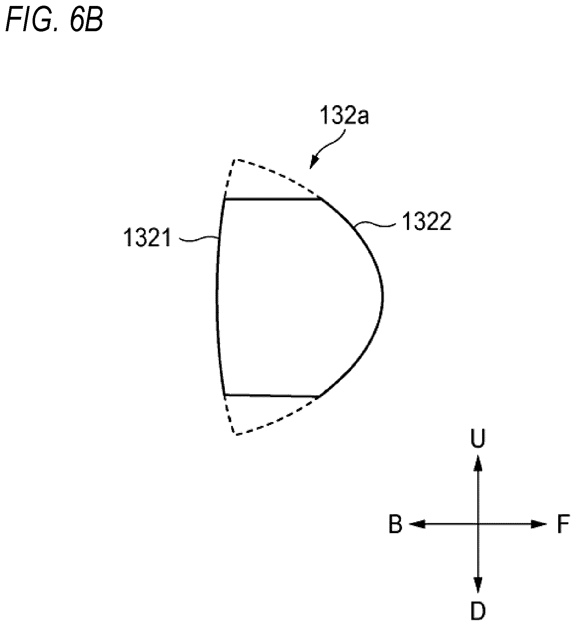

Next, a modification of the lens included in the lens unit 32 will be described with reference to FIGS. 6A and 6B. In the present modification, a lens 132a, which is a modification of the lens 32a, among the lenses included in the lens unit 32 will be described. Among the lenses included in the lens unit 32, lenses other than the lens 132a have the same configuration as the lens 132a, but are smaller than the lens 132a. Like the lens 32a according to the first embodiment, the lens 132a is formed of a material having transparency such as a transparent resin such as acrylic or glass. The lens 132a is different from the lens 32a in that an upper end portion, a lower end portion, a left end portion, and a right end portion of the lens 132a are cut off.

The lens 132a includes a first surface 1321 and a second surface 1322 that is a surface on a side opposite to the first surface 1321. As illustrated in FIG. 6A, the lens 132a has a substantially quadrangular shape in a front view. That is, the lens 132a has a rectangular shape in a front view. In a state where the lamp unit 30 is mounted on the vehicle 100, the lens 132a has a rectangular shape in a front view.

As illustrated in FIG. 6B, the first surface 1321 and the second surface 1322 are convex surfaces. The first surface 1321 and the second surface 1322 are both substantially arcuate in a side view, and a first curvature in the first surface 1321 is smaller than a second curvature in the second surface 1322. Therefore, the first surface 1321 is more easily seen in a rectangular shape in a front view than the second surface 1322.

In the modification, the same effects as those of the lamp unit 10 according to the first embodiment can be obtained.

In the modification, since the first curvature of the first surface 1321 of the lens 132a is smaller than the second curvature of the second surface 1322 of the lens 132a, the lens unit 32 has a rectangular shape in a front side. According to the modification, the design property of the lamp unit 10 can be improved.

Although the embodiments of the present disclosure have been described above, it is needless to say that the technical scope of the present disclosure should not be construed as being limited by the description of the embodiments. The present embodiment is merely an example, and it will be obvious to those skilled in the art that various embodiments can be changed within the scope of the disclosure described in the claims. The technical scope of the present disclosure should be defined based on the scope of the disclosure described in the claims and the scope of equivalents thereof.

In the above embodiments, since the lamp unit 10 is mounted on the rear of the vehicle 100, the front of the lamp unit 10 coincides with the rear of the vehicle 100, and the rear of the lamp unit 10 coincides with the front of the vehicle 100, but the present disclosure is not limited thereto. The lamp unit 10 may be mounted in front of the vehicle 100, and in this case, the front side of the lamp unit 10 coincides with the front of the vehicle 100, and the rear of the lamp unit 10 coincides with the rear of the vehicle 100.

In the above embodiments, the lens unit 32 includes three lenses, but may include two lenses or four or more lenses, or may be a single lens.

In the above embodiments, the sizes of the lenses included in the lens unit 32 are different, the sizes of the lenses included in the lens unit 32 may be the same.

In the above embodiments, the lens unit 32 is disposed on the back side of the shielding portion 5, but may be disposed in the first opening portion 511 of the shielding portion 5. When the lens unit 32 is disposed in the first opening portion 511 of the shielding portion 5, the shielding portion 5 is disposed so as to be inclined such that, for example, at least a part of the lens unit 32 is not visually recognized from the outside of the lamp unit 10 by the plate-shaped portion 52 of the shielding portion 5.

In the above embodiments, the plate-shaped portion 52 hides a part of the lens unit 32 so that a part (upper portion) of the lens of the lens unit 32 is invisible from the outside of the lamp unit 10 in a front view, but a lower portion of a lens included in the lens unit 32 may be hided. Further, the plate-shaped portion 52 may entirely hide some of the plurality of lenses included in the lens unit 32. That is, the plurality of lenses included in the lens unit 32 may be disposed such that the lower portions of the plurality of lenses or some of the plurality of lenses are entirely invisible from the outside of the lamp unit 10 in a front view.

The present application appropriately incorporates contents disclosed in Japan Patent Application No. 2021-109185 filed on June 30, 2021.

## Claims

1. A lamp unit comprising:
a first unit including a light emitting unit;
a second unit including a light source and a lens unit having a shape different from that of the light emitting unit; and
a shielding portion having an opening portion and shielding a member provided on a back side of the shielding portion from the outside,
wherein the first unit is disposed at a position where the light emitting unit is capable of being visually recognized from the outside of the lamp unit in a front view,
wherein the lens unit of the second unit is disposed on the back side of the shielding portion or in the opening portion, and
wherein at least a part of the lens unit of the second unit is provided at a position where at least the part is invisible in a front view, and light emitted from the light source is projected forward via the opening portion provided in the shielding portion.

2. The lamp unit according to claim 1,
wherein the light emitting unit has a flat shape extending in a longitudinal direction of the lamp unit, and
wherein the opening portion has a flat shape extending in the longitudinal direction.

3. The lamp unit according to claim 1 or 2,
wherein the lens unit includes a plurality of lenses, and
wherein an arrangement direction of the plurality of lenses coincides with a longitudinal direction of the opening portion.

4. The lamp unit according to any one of claims 1 to 3,
wherein the second unit emits light to a region where the light is inclined downward by 5 degrees or more with respect to an axis extending in a horizontal direction from the lamp unit.

5. The lamp unit according to any one of claims 1 to 4,
wherein the lens unit has a rectangular shape in a front view.

6. The lamp unit according to any one of claims 1 to 5,
wherein the lens unit has a first surface and a second surface that is a surface on a side opposite to the first surface,
wherein the first surface is disposed at a position closer to the shielding portion than the second surface, and
wherein a first curvature in the first surface is smaller than a second curvature in the second surface.

7. The lamp unit according to any one of claims 1 to 6,
wherein the shielding portion has at least one plate-shaped portion at a predetermined length in the longitudinal direction of the lamp unit,
wherein the plate-shaped portion is disposed so as to be inclined in the horizontal direction, and
wherein a first angle that is an inclination angle of the plate-shaped portion with respect to the horizontal direction is smaller than a second angle that is an angle between an optical axis of light emitted from the light source and the horizontal direction.
